# EUROPEAN PATENT APPLICATION

(11) **EP 4 611 109 A1**
(43) Date of publication of application: **03.09.2025**
(21) Application number: 23933698.5
(22) Date of filing: 08.09.2023
(51) Int. Cl.: H01M 10/42, H01M 10/0525

(54) **BATTERY CELL, BATTERY, AND ELECTRIC DEVICE**

(30) Priority: 18.04.2023 CN 202320872287 U
(71) Applicant: Contemporary Amperex Technology Co., Limited, Ningde, Fujian 352100 (CN)
(72) Inventor: ZHANG, Jijun, Ningde, Fujian 352100 (CN); ZHU, Cuicui, Ningde, Fujian 352100 (CN); WANG, Shaofei, Ningde, Fujian 352100 (CN); WEI, Yimin, Ningde, Fujian 352100 (CN)
(74) Representative: Ran, Handong
(86) International application number: PCT/CN2023/117769
(87) International publication number: WO 2024/216827

(57) **Abstract**

A battery cell, a battery, and a power consuming device are provided. A battery cell 1 includes a shell 100, an electrode assembly 200, a first processor 300, a detection sensor 400, and a second processor 500. The electrode assembly 200 is arranged inside the shell 100. The first processor 300 is arranged inside the shell 100. The detection sensor 400 is arranged inside the shell 100 and is electrically connected to the first processor 300 via first communication lines 410. The second processor 500 is arranged outside the shell 100 and is electrically connected to the first processor 300 via second communication lines 510. A quantity of the second communication lines 510 is less than a quantity of the first communication lines 410. In the foregoing manner, a quantity of communication lines running through the shell can be reduced, thereby improving reliability and stability of the battery cell.

## Description

### TECHNICAL FIELD

The present application relates to the field of battery technologies, and in particular, to a battery cell, a battery, and a power consuming device.

### BACKGROUND

With the development of battery technologies, battery cells are used in more and more fields, and gradually replace conventional fossil energy sources in the automotive power field. The battery cells may store chemical energy and controllably convert the chemical energy into electric energy. A reusable battery cell after being discharged may be charged to activate active materials, to continue to be used.

Generally, the battery cell includes an electrode assembly, an electrode column, and a shell. The shell can accommodate the electrode assembly. The electrode assembly is electrically connected to the outside through the electrode column. In addition, to improve reliability of the battery cell, in the related art, a sensor is usually integrated on the battery cell. However, integration of the sensor makes routing of the battery cell complex, affecting further improvement of the reliability of the battery cell.

### SUMMARY

In view of the foregoing problem, the present application provides a battery cell, a battery, and a power consuming device, which can reduce a quantity of communication lines running through a shell, thereby improving reliability and stability of the battery cell.

According to a first aspect, the present application provides a battery cell. The battery cell includes a shell, an electrode assembly, a first processor, a detection sensor, and a second processor. The electrode assembly is arranged inside the shell. The first processor is arranged inside the shell. The detection sensor is arranged inside the shell and is electrically connected to the first processor via first communication lines. The second processor is arranged outside the shell and is electrically connected to the first processor via second communication lines. A quantity of the second communication lines is less than a quantity of the first communication lines.

In the foregoing manner, the detection sensor is arranged, and the quantity of the second communication lines is less than the quantity of the first communication lines. In this way, compared with that the detection sensor is arranged inside the shell and the first communication lines run through the shell to be led out, a quantity of communication lines running through the shell can be effectively reduced, and a probability that the communication lines are affected or damaged can be reduced. In this way, a risk of a bad situation of the communication lines is reduced, and impact of the risk of the communication lines on other components and structures is reduced, thereby improving reliability and stability of the battery cell. In addition, the quantity of communication lines running through the shell is reduced, so that the battery cell is more easily assembled. In addition, the quantity of communication lines running through the shell is reduced, so that the shell can be more easily sealed, thereby improving working stability of the battery cell.

In some embodiments, the shell includes a wall portion. Mounting holes are provided in the wall portion. The second communication lines extend from the inside of the shell to the outside of the shell via the mounting holes.

In the foregoing manner, the second communication lines may be allowed to extend from the inside of the shell to the outside of the shell through the shell, and the quantity of communication lines running through the shell is reduced, so that an area occupied by the mounting holes in the wall portion is reduced, thereby improving space utilization of the wall portion.

In some embodiments, a quantity of the mounting holes and the quantity of the second communication lines are the same, and are in a one-to-one correspondence.

In the foregoing manner, interference between different second communication lines can be reduced, and the quantity of communication lines running through the shell is reduced, so that the quantity of provided mounting holes is correspondingly reduced, which is beneficial to reducing costs and sealing the shell, thereby improving working reliability of the battery cell.

In some embodiments, the battery cell includes a first circuit board. The first circuit board is arranged inside the shell and blocks the mounting holes. The first processor is arranged on the first circuit board.

In the foregoing manner, the first circuit board is arranged to block the mounting holes, so that a sealing effect of the shell can be improved, and leakage of an electrolyte solution inside the battery cell via the mounting holes can be limited. The first processor is arranged on the first circuit board, so that connection stability between the first processor and another component can be improved.

In some embodiments, the first processor is arranged on a side of the first circuit board facing away from the inside of the shell.

In the foregoing manner, a risk of a short circuit caused by contact between the first processor and the electrode assembly can be reduced, and corrosion damage of the electrode assembly and/or the electrolyte solution to the first processor can also be reduced.

In some embodiments, the detection sensor includes a sampling module and a conditioning module. The sampling module is arranged on the first circuit board and is electrically connected to the conditioning module. The conditioning module is electrically connected to the first processor via the first communication lines. The sampling module is arranged on a side of the first circuit board facing the inside of the shell. The conditioning module is arranged on the side of the first circuit board facing away from the inside of the shell.

In the foregoing manner, a risk of a short circuit caused by contact between the conditioning module and the electrode assembly can be reduced, and corrosion damage of the electrode assembly and/or the electrolyte solution to the conditioning module can also be reduced.

In some embodiments, a first fixing groove is provided on a side of the wall portion facing the inside of the shell. The mounting holes are provided at the bottom of the first fixing groove and are in communication with the first fixing groove. The first fixing groove is in communication with the inside of the shell. The first circuit board is fixedly arranged in the first fixing groove.

In the foregoing manner, the first fixing groove is provided, so that space occupied by the first circuit board can be reduced, so that an entire volume of the battery cell is small, thereby improving volume energy density of the battery cell. In addition, a moving range of the first circuit board in a radial direction of the mounting holes can also be limited, thereby facilitating mounting of the first circuit board, and improving structural stability of the first circuit board. In addition, the first circuit board is fixedly arranged in the first fixing groove, so that an area of the first circuit board exposed to the inside of the shell can also be reduced, to reduce a probability of corrosion by the electrolyte solution. In addition, the first circuit board can also be further away from the electrode assembly, to reduce a probability of a short circuit caused by contact with the electrode assembly, so that reliability of the first circuit board can be improved.

In some embodiments, the battery cell includes a second circuit board. The second circuit board is arranged outside the shell and blocks the mounting holes. The second processor is arranged on the second circuit board.

In the foregoing manner, leakage of the electrolyte solution inside the battery cell via the mounting holes can be limited. The second processor is arranged on the second circuit board, so that connection stability between the second processor and another component can be improved.

In some embodiments, a second fixing groove is provided on a side of the wall portion facing away from the inside of the shell. The second fixing groove is in communication with the mounting holes and the outside of the shell. The second circuit board is fixedly arranged in the second fixing groove.

In the foregoing manner, a moving range of the second circuit board in the radial direction of the mounting holes can be limited, thereby facilitating mounting of the second circuit board.

In some embodiments, the second processor is arranged on a side of the second circuit board facing away from the inside of the shell.

In the foregoing manner, a risk of a short circuit caused by contact between the second processor and the electrode assembly can be reduced, and corrosion damage of the electrode assembly and the electrolyte solution to the second processor can also be reduced, thereby facilitating a connection between the second processor and a component located inside the shell. In addition, the second processor is arranged on the side of the second circuit board facing away from the inside of the shell, to facilitate heat dissipation of the second processor, thereby improving heat dissipation performance.

In some embodiments, the battery cell includes a functional circuit. The functional circuit is electrically connected to the second processor and is arranged on the side of the second circuit board facing away from the inside of the shell.

In the foregoing manner, a risk of a short circuit caused by contact between the functional circuit and the electrode assembly is reduced, and corrosion damage of the electrode assembly and the electrolyte solution to the functional circuit is also reduced, thereby facilitating a connection between the functional circuit and a component located inside the shell.

In some embodiments, at least two detection sensors are provided. The at least two detection sensors are respectively connected to the first processor via respective first communication lines. The first processor is configured to convert output signals of the at least two detection sensors into a serial signal and transmit the serial signal to the second processor via the second communication lines.

In the foregoing manner, the first processor can effectively output information about an internal environment of the shell obtained by the at least two detection sensors to the outside, so that the quantity of required second communication lines can be reduced based on that the output signals of the at least two detection sensors are converted into the serial signal, and the quantity of mounting holes can be correspondingly reduced, thereby facilitating sealing of the shell, and improving the reliability and stability of the battery cell.

In some embodiments, the battery cell further includes the functional circuit. The functional circuit is arranged outside the shell. The functional circuit is electrically connected to the second processor via third communication lines. A quantity of the third communication lines is greater than the quantity of the second communication lines.

In the foregoing manner, the quantity of communication lines running through the shell can be reduced, thereby reducing a risk of unreliability caused by a large quantity of communication lines. In this way, the shell can be more easily sealed, thereby improving working stability of the battery cell.

In some embodiments, the functional circuit includes at least one of an equalization circuit and a communication circuit.

In the foregoing manner, the equalization circuit is arranged, so that consistency of a plurality of battery cells can be maintained, thereby reducing a risk of overcharging or overdischarging a battery cell. By using the communication circuit, the second processor can transmit a running status of the battery cell to an external system, for the external system to manage the battery cell.

In some embodiments, the battery cell includes two electrode columns. The two electrode columns run through the wall portion at an interval and are electrically connected to the electrode assembly. The first processor and the second processor are electrically connected to the two electrode columns. The electrode assembly separately supplies power to the first processor and the second processor through the two electrode columns.

In the foregoing manner, the electrode assembly is arranged to separately supply power to the first processor and the second processor through the two electrode columns, so that an additional power supply does not need to be introduced, so that space utilization of the battery cell can be improved, and connection lines between the battery cell and the outside can be simplified.

In some embodiments, the first processor is electrically connected to the two electrode columns via a first power supply line located inside the shell. The second processor is electrically connected to the two electrode columns via a second power supply line located outside the shell.

In the foregoing manner, the first power supply line and the second power supply line are respectively arranged inside and outside the shell, so that lengths of the power supply lines can be reduced, redundancy of the power supply lines can be reduced, and a risk of a bad situation of the power supply lines can be reduced, thereby improving the working reliability of the battery cell.

In some embodiments, the shell includes a case and an end cover. The case is provided with an open end. The end cover covers the open end. The electrode assembly is arranged inside the case. The mounting holes are provided on the end cover. The first processor and the detection sensor are located on a side of the end cover facing the inside of the shell. The second processor is located on a side of the end cover facing away from the inside of the shell.

In the foregoing manner, the end cover may have a function of positioning the two electrode columns. The two electrode columns may be fixed relative to the end cover.

According to a second aspect, the present application provides a battery, including the foregoing battery cell.

According to a third aspect, the present application provides a power consuming device, including the foregoing battery.

The foregoing descriptions are merely an overview of the technical solutions in the present application. In order that technical means of the present application can be understood more clearly so that the technical solutions can be implemented according to content of the descriptions, and in order that the foregoing and other objectives, features, and advantages of the present application can be understood more clearly, specific embodiments of the present application are described below.

### BRIEF DESCRIPTION OF THE DRAWINGS

Various other advantages and benefits will become apparent to those of ordinary skill in the art upon reading the following detailed description of the preferred embodiments. The accompanying drawings are only for the purpose of illustrating the preferred embodiments and are not construed as limiting the present application. In addition, in all the accompanying drawings, same components are indicated by same reference numerals. In the accompanying drawings:
FIG. 1 is a schematic structural diagram of a vehicle according to one or more embodiments;
FIG. 2 is a schematic diagram of an exploded structure of a battery according to one or more embodiments;
FIG. 3 is a schematic diagram of an exploded structure of a battery cell according to one or more embodiments;
FIG. 4 is a top schematic structural diagram of the battery cell shown in FIG. 3;
FIG. 5 is a partial schematic diagram of a cross-sectional structure of the battery cell shown in FIG. 4 along a cutting line B-B;
FIG. 6 is a schematic block diagram of a circuit structure of a battery cell according to one or more embodiments;
FIG. 7 is a schematic structural diagram of an electrode column, a first processor, a first circuit board, and a detection sensor on a side of a wall portion facing the inside of a shell according to one or more embodiments;
FIG. 8 is a schematic diagram of a connection of an electrode column, a second processor, a functional circuit, and a second circuit board on a side of a wall portion facing away from the inside of a shell according to one or more embodiments;
FIG. 9 is a schematic diagram of a process of mounting a second circuit board on a wall portion according to one or more embodiments;
FIG. 10 is still another schematic structural diagram of an electrode column, a second processor, a functional circuit, and a second circuit board on a side of a wall portion facing away from the inside of a shell according to one or more embodiments; and
FIG. 11 is a schematic structural diagram of the structure shown in FIG. 10 in which the second processor, the functional circuit, and the second circuit board are hidden.

Reference numerals in the specific embodiments are as follows:
1000a-vehicle;
100a-battery; 200a-controller; 300a-motor;
10a-box body; 11a-first part; 12a-second part;
1-battery cell; 100-shell; 101-wall portion; 102-mounting hole; 103-first fixing groove; 104-second fixing groove; 110-case; 111-open end; 112-opening; 120-end cover; 200-electrode assembly; 201-tab; 300-first processor; 310-first circuit board; 320-conditioning module; 400-detection sensor; 410-first communication line; 420-sampling module; 500-second processor; 510-second communication line; 520-second circuit board; 530-functional circuit; 531-equalization circuit; 532-communication circuit; 540-third communication line; 600-electrode column; 610-first power supply line; and 620-second power supply line.

### DETAILED DESCRIPTION

The embodiments of the technical solutions of the present application will be described in detail below with reference to the accompanying drawings. The following embodiments are only used to illustrate the technical solutions of the present application more explicitly, and are thus only interpreted as examples, rather than used to limit the protection scope of the present application.

Unless otherwise defined, meanings of all technical and scientific terms used in this specification are the same as those usually understood by a person skilled in the art to which the present application belongs. Terms used in this specification are only intended to describe purposes of the specific embodiments, but are not intended to limit the present application. In the specification and claims of the present application and the foregoing description of the accompanying drawings, the terms "include", "have", and any variant thereof are intended to cover a non-exclusive inclusion.

In the description according to the embodiments of the present application, the technical terms "first", "second", and the like are only used to distinguish different objects, and should not be understood as indicating or implying relative importance or implying the number, specific order, or primary and secondary relationship of indicated technical features. In the description according to the embodiments of the present application, "a plurality of" means two or more, unless otherwise explicitly and specifically defined.

"Embodiment" mentioned in this specification means that particular features, structures, or characteristics described with reference to the embodiment may be included in at least one embodiment of the present application. The term appearing at different positions of this specification may not refer to the same embodiment or an independent or alternative embodiment that is mutually exclusive with another embodiment. It shall be explicitly and implicitly understood by a person skilled in the art that the embodiments described herein may be combined with other embodiments.

In the description of the embodiments of the present application, the term "and/or" is only an association to describe the associated objects. It can mean that there are three kinds of relationships, such as A and/or B, which means that A exists alone, A and B exist at the same time, and B exists alone. In addition, a character "I" in this specification generally indicates an "or" relationship between contextually associated objects.

In the description of the embodiments of the present application, the term "a plurality of" means two or more (including two). Similarly, "a plurality of groups" means two or more groups (including two groups), and "a plurality of pieces" means two or more pieces (including two pieces).

In the description of the embodiments of the present application, the directions or positional relationships indicated by the technical terms such as "center", "longitudinal", "transverse", "length", "width", "thickness", "upper", "lower", "front", "rear", "left", "right", "vertical", "horizontal", "top", "bottom", "inside", "outside", "clockwise", "counterclockwise", "axial", "radial", and "circumferential", are only for the convenience of describing the embodiments of the present application and simplifying the description, rather than indicating or implying that the involved device or element should have a specific orientation or should be configured or operated in the specific orientation, therefore, they cannot be understood as limiting the embodiments of the present application.

In the description of the embodiments of the present application, unless otherwise explicitly specified and defined, the technical terms such as "mount", "connect", "connection", and "fix" should be understood in a broad sense. For example, the connection may be a fixed connection, a detachable connection, or an integral connection; or the connection may be a mechanical connection or an electrical connection; or the connection may be a direct connection, an indirect connection through an intermediate medium, internal communication between two elements, or an interaction relationship between two elements. For those of ordinary skill in the art, the specific meanings of the foregoing terms in the embodiments of the present application may be interpreted according to specific situations.

With the development of battery technologies, battery cells are used in more and more fields, and gradually replace conventional fossil energy sources in the automotive power field. The battery cells may store chemical energy and controllably convert the chemical energy into electric energy. A reusable battery cell after being discharged may be charged to activate active materials, to continue to be used.

Generally, the battery cell may include an electrode assembly, an electrode column, and a shell. The shell can accommodate the electrode assembly. The electrode assembly is electrically connected to the outside through the electrode column. In a structure of the existing battery cell, it is not convenient to obtain information about an internal environment of the shell at the outside of the shell. Therefore, it is not convenient to effectively manage a working status of the battery cell. In the related art, a sensor configured to obtain the information about the internal environment of the shell is arranged inside the shell. A detection sensor needs to run from the inside of the shell to the outside of the shell via a large quantity of communication lines, and the large quantity of communication lines interfere with each other. In this way, heat dissipation of the communication lines is not smooth, and a risk such as firing, heating, or a short circuit may be prone to occur, resulting in poor reliability and stability of the battery cell.

To reduce a quantity of communication lines running through the shell, a first processor and a second processor may be respectively arranged. The first processor is arranged inside the shell and is connected to the detection sensor, so that a large quantity of first communication lines connected between the first processor and the detection sensor do not need to run through the shell. The second processor is arranged outside the shell and is electrically connected to the first processor via a small quantity of second communication lines, so that a quantity of the second communication lines may be set to be less than a quantity of the first communication lines, and the second communication lines run through the shell to connect the first processor inside the shell to the second processor outside the shell. Compared with that the first communication lines directly run from the inside of the shell to the outside of the shell, this can effectively reduce the quantity of communication lines running through the shell. In this way, an internal environment of the shell can be obtained by using the detection sensor, and a probability that the communication lines generate a risk can also be reduced, thereby improving reliability and stability of the battery cell.

Based on the foregoing considerations, the present application provides a battery cell, a battery, and a power consuming device. The battery cell includes a shell, an electrode assembly, a first processor, a detection sensor, and a second processor. The electrode assembly is arranged inside the shell. The first processor is arranged inside the shell. The detection sensor is arranged inside the shell and is electrically connected to the first processor via first communication lines, so that the first communication lines do not need to directly run through the shell to be led outside the shell. The second processor is arranged outside the shell and is electrically connected to the first processor via second communication lines. A quantity of the second communication lines is less than a quantity of the first communication lines. In this way, the small quantity of second communication lines can run through the shell to be led outside the shell, thereby reducing a probability of being damaged in an external environment. A smaller quantity indicates higher reliability. In this way, a quantity of communication lines running through the shell can be reduced, and a risk caused during running of the communication lines can be reduced, so that a probability a risk of a bad situation of the communication lines can be reduced, and impact of the risk of the communication lines on other components and structures can also be reduced, thereby improving reliability and stability of the battery cell. In addition, the quantity of communication lines running through the shell is reduced, so that the battery cell is more easily assembled. In addition, when the quantity of communication lines running through the shell is small, the shell is more easily sealed.

The battery cell, the battery, and the power consuming device disclosed in the embodiments of the present application may be used in a power consuming device using a battery as a power supply or various energy storage systems using a battery as an energy storage element. The power consuming device may be, but is not limited to a mobile phone, a tablet computer, a notebook computer, an electric toy, an electric tool, an electric bicycle, an electric vehicle, a ship, a spacecraft, or the like. The electric toy may include a fixed or mobile electric toy, for example, a game console, an electric vehicle toy, an electric ship toy, or an electric aircraft toy. The spacecraft may include an aircraft, a rocket, a space shuttle, a spaceship, or the like.

For ease of description, the following embodiments are described by using an example in which a power consuming device in an embodiment of the present application is a vehicle 1000a.

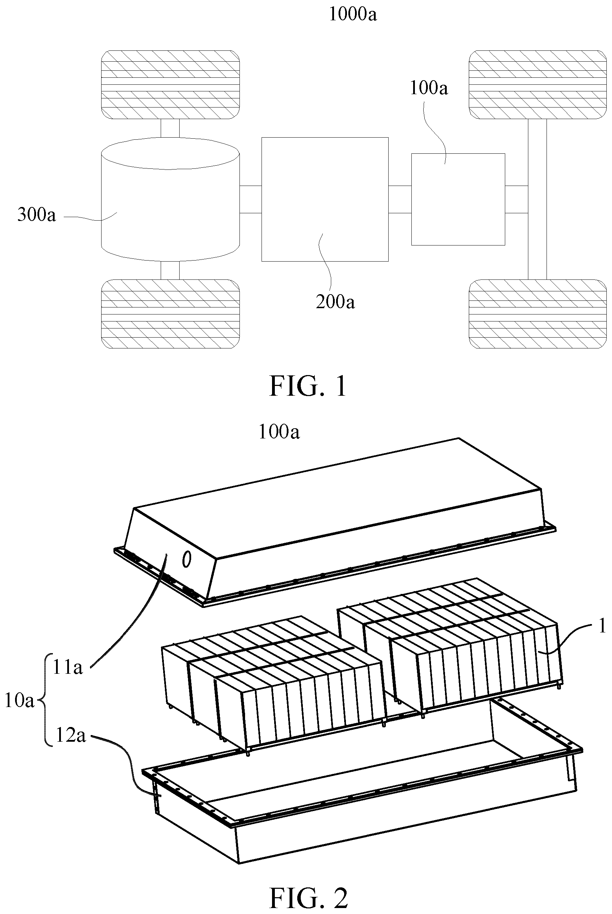

Referring to FIG. 1, the vehicle 1000a may be a fuel powered vehicle, a gas powered vehicle, or a new energy vehicle. The new energy vehicle may be a pure electric vehicle, a hybrid electric vehicle, or an extended range vehicle, or the like. A battery 100a is arranged inside the vehicle 1000a. The battery 100a may be arranged at the bottom, head, or tail of the vehicle 1000a. The battery 100a may be configured to supply power to the vehicle 1000a. For example, the battery 100a may serve as a power supply for operating the vehicle 1000a. The vehicle 1000a may further include a controller 200a and a motor 300a. The controller 200a is configured to control the battery 100a to supply power to the motor 300a, for example, to meet working power requirements during starting, navigation, and traveling of the vehicle 1000a.

In some embodiments of the present application, the battery 100a may serve as a power supply for operating the vehicle 1000a, and may also serve as a power supply for driving the vehicle 1000a, to provide driving power for the vehicle 1000a in place of or partially in place of fuel or natural gas.

In some embodiments, the battery 100a may be an energy storage device. The energy storage device includes an energy storage container, an energy storage electric cabinet, or the like.

A battery 100a mentioned in the embodiments of the present application is a single physical module that includes one or more battery cells 1 for providing higher voltage and capacity.

In this embodiment of the present application, the battery cell 1 may be a secondary battery. The secondary battery is a battery cell that can activate active materials by charging after the battery cell is discharged and continue to be used. Each battery cell 1 may alternatively be a primary battery.

The battery cell 1 includes, but is not limited to, a lithium-ion battery, a sodium-ion battery, a sodium lithium ion battery, a lithium metal battery, a sodium metal battery, a lithium sulfur battery, a magnesium-ion battery, a nickel hydrogen battery, a nickel cadmium battery, a lead storage battery, or the like. The battery cell 1 may be cylindrical, flat, cuboid, or in other shapes.

In some embodiments, the battery 100a may be a battery module. When a plurality of battery cells 1 are provided, the plurality of battery cells 1 are arranged and fixedly form one battery module.

In some embodiments, referring to FIG. 2, the battery 100a may be a battery pack. The battery pack includes a box body 10a and a battery cell 1. The battery cell 1 or a battery module is accommodated in the box body 10a.

In some embodiments, the box body 10a may serve as a part of a chassis structure of the vehicle 1000a. For example, a part of the box body 10a may become at least a part of a floor of the vehicle 1000a, or a part of the box body 10a may become at least a part of a cross beam and a longitudinal beam of the vehicle 1000a.

Referring to FIG. 2, the battery 100a includes the box body 10a and battery cells 1. The battery cells 1 are accommodated in the box body 10a. The box body 10a is configured to provide an accommodating space for the battery cells 1. The box body 10a may use a variety of structures. In some embodiments, the box body 10a may include a first part 11a and a second part 12a, and the first part 11a and the second part 12a cover each other. The first part 11a and the second part 12a jointly define an accommodating space for accommodating the battery cells 1. The second part 12a may be a hollow structure with an opening on one side. The first part 11a may be a plate-shaped structure. The first part 11a covers the opening side of the second part 12a, so that the first part 11a and the second part 12a jointly define the accommodating space. The first part 11a and the second part 12a each may also be a hollow structure with an opening on one side. The open side of the second part 12a covers the open side of the first part 11a. Certainly, the box body 10a formed by the first part 11a and the second part 12a may be in various shapes, for example, a cylinder, and a cuboid.

In the battery 100a, a plurality of battery cells 1 may be provided, and the plurality of battery cells 1 may be connected in series, parallel, or series-parallel. Series-parallel connection means that both series connection and parallel connection exist among the plurality of battery cells 1. The plurality of battery cells 1 may be directly connected in series, in parallel, or in a series-parallel connection, and then the whole formed by the plurality of battery cells 1 is accommodated in the box body 10a. Certainly, the battery 100a may also be in the form of a battery module formed by the plurality of battery cells 1 that are first connected in series, parallel, or series-parallel. The plurality of battery modules are then connected in series, parallel, or series-parallel to form a whole and accommodated in the box body 10a. The battery 100a may also include other structures, for example, the battery 100a may also include a bus component for achieving an electrical connection between the plurality of battery cells 1.

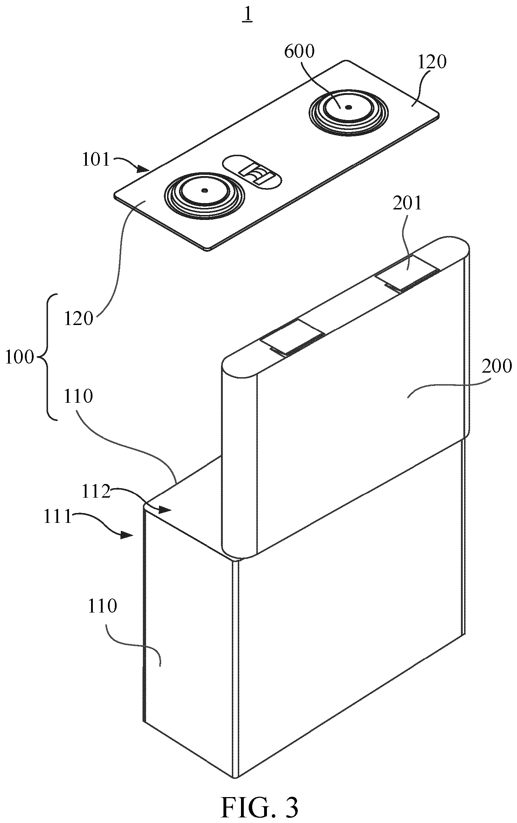

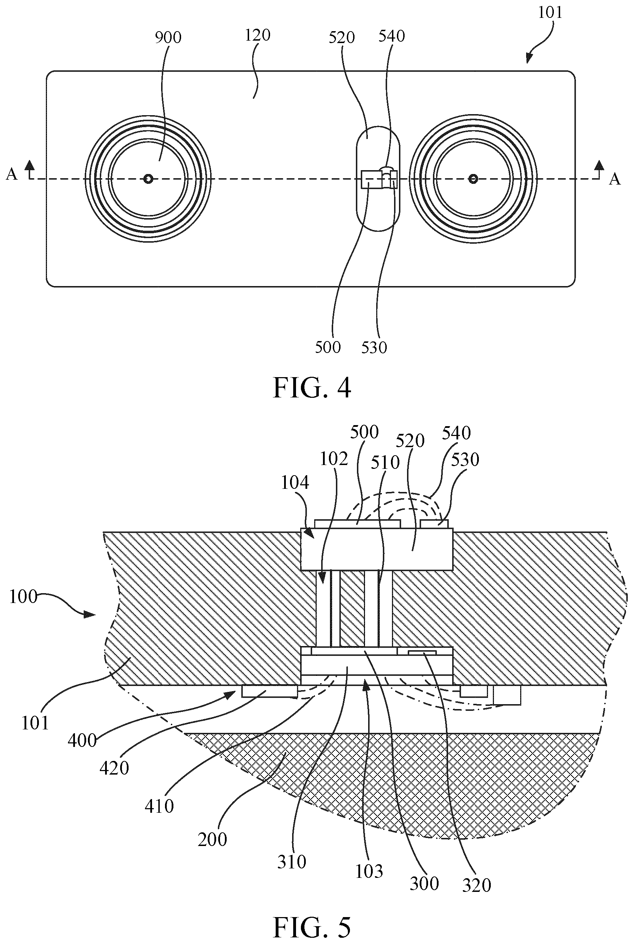

Referring to FIG. 3 and FIG. 4, a battery cell 1 is a smallest unit forming a battery. In this embodiment, the cylindrical battery cell 1 is used as an example for description. As shown in FIG. 3 and FIG. 4, the battery cell 1 includes a shell 100, an electrode assembly 200, and other functional components.

In some embodiments, the shell 100 is configured to enclose components such as the electrode assembly 200 and an electrolyte. The shell 100 may be a steel shell, an aluminum shell, a plastic shell (for example, polypropylene), a composite metal shell (for example, a copper-aluminum composite shell), an aluminum plastic film, or the like.

The shell 100 may include an end cover 120 and a case 110. The end cover 120 is a component that covers an opening of the case 110 to isolate an internal environment of the battery cell 1 from an external environment. A shape of the end cover 120 is not limited and may be adapted to a shape of the case 110 to fit the case 110. Optionally, the end cover 120 may be made of a material with specified hardness and strength (for example, aluminum alloy), so that the end cover 120 is less likely to deform under extrusion and collision, enabling the battery cell 1 to have a higher structural strength and enhanced safety performance. Functional components such as electrode columns 600 may be arranged on the end cover 120. The electrode columns 600 may be configured to electrically connect to the electrode assembly 200 to output or input electric energy of the battery cell 1. In some embodiments, the end cover 120 may also be provided with a pressure relief mechanism configured to relieve internal pressure when the internal pressure or temperature in the battery cell 1 reaches a threshold. The end cover 120 may also be made of various materials, for example, but is not limited to, copper, iron, aluminum, stainless steel, an aluminum alloy, and plastic. In some embodiments, an insulating component may also be arranged on an inner side of the end cover 120. The insulating component can be configured to isolate electrical connection components in the case 110 from the end cover 120, reducing a risk of short circuit. For example, the insulating component may be made of plastic or rubber.

The case 110 is an assembly configured to form an internal environment of the battery cells 1 together with the end cover 120, where the formed internal environment may be configured to accommodate the electrode assembly 200, an electrolyte solution, and other components. The case 110 and the end cover 120 may be separate components. An opening 112 may be provided in the case 110, and at the opening 112, the end cover 120 covers the opening 112 to form the internal environment of the battery cell 1. Without limitation, the end cover 120 and the case 110 may also be integrated. Specifically, the end cover 120 and the case 110 may form a shared connection surface before other components are arranged inside the case, and then the end cover 120 covers the case 110 when the inside of the case 110 needs to be enclosed. The case 110 may be of various shapes and sizes, such as a rectangular shape, a cylindrical shape, and a hexagonal prism shape. Specifically, the shape of the case 110 may be determined based on a specific shape and size of the electrode assembly 200. The case 110 may be made of various materials, for example, but is not limited to, copper, iron, aluminum, stainless steel, an aluminum alloy, and plastic.

The electrode assembly 200 is a component in the battery cell 1 that undergoes electrochemical reactions. The case 110 may include one or more electrode assemblies 200.

In some embodiments, the electrode assembly 200 includes a positive electrode, a negative electrode, and a separating member. During charge and discharge of the battery cell, active ions (such as lithium ions) intercalate and deintercalate back and forth between the positive electrode and the negative electrode. The separating member is arranged between the positive electrode and the negative electrode, which may have a function of avoiding a short circuit between the positive and negative electrodes and allow active ions to pass through.

In some embodiments, the positive electrode may be a positive electrode plate, and the positive electrode plate may include a positive electrode current collector and a positive electrode active material arranged on at least one surface of the positive electrode current collector.

For example, the positive electrode current collector has two surfaces opposite to each other in a thickness direction of the positive electrode current collector, and the positive electrode active material is arranged on either or both of the two opposite surfaces of the positive electrode current collector.

For example, the positive electrode current collector may be a metal foil or a composite current collector. For example, as the metal foil, aluminum or stainless steel whose surface is treated with silver, copper, aluminum, nickel, carbon electrode, carbon, nickel, titanium, or the like may be used. The composite current collector may include a polymer material base layer and a metal layer. The composite current collector may be formed by forming a metal material (aluminum, an aluminum alloy, nickel, a nickel alloy, titanium, a titanium alloy, silver, a silver alloy, or the like) on a polymer material substrate (for example, a substrate of polypropylene, polyethylene terephthalate, polybutylene terephthalate, polystyrene, or polyethylene).

For example, the positive electrode active material may include at least one of the following materials: lithium-containing phosphates, lithium transition metal oxides, and their respective modified compounds. However, the present application is not limited to such materials, and may alternatively use other conventional materials that can be used as positive electrode active materials for batteries. Only one or a combination of two or more of the positive electrode active materials may be used. An example of the lithium-containing phosphate may include, but is not limited to, at least one of lithium iron phosphate (for example, LiFePO₄ (also referred to as LFP for short)), a composite material of lithium iron phosphate and carbon, lithium manganese phosphate (for example, LiMnPO₄), a composite material of lithium manganese phosphate and carbon, lithium iron manganese phosphate, and a composite material of lithium manganese iron phosphate and carbon. An example of the lithium transition metal oxide may include, but is not limited to, at least one of a lithium cobalt oxide (for example, LiCoO₂), a lithium nickel oxide (for example, LiNiO₂), a lithium manganese oxide (for example, LiMnO₂ or LiMn2O₄), a lithium nickel cobalt oxide, a lithium manganese cobalt oxide, a lithium nickel manganese oxide, a lithium nickel cobalt manganese oxide (for example, LiNi_{1/3}Co_{1/3}Mn_{1/3}O₂ (also referred to as NCM₃₃₃ for short), LiNi_{0.5}Co_{0.2}Mn_{0.3}O₂ (also referred to as NCM₅₂₃ for short), LiNi_{0.5}Co_{0.25}Mn_{0.25}O₂ (also referred to as NCM₂₁₁ for short), LiNi_{0.6}Co_{0.2}Mn_{0.2}O₂ (also referred to as NCM₆₂₂ for short), LiNi_{0.8}Co_{0.1}Mn_{0.1}O₂ (also referred to as NCM₈₁₁ for short)), a lithium nickel cobalt aluminum oxide (for example, LiNi_{0.85}Co_{0.15}Al_{0.05}O₂), their modified compounds, and the like.

In some embodiments, the negative electrode may be a negative electrode plate, and the negative electrode plate may include a negative electrode current collector.

For example, the negative electrode current collector may be a metal foil, a foam metal, or a composite current collector. For example, as the metal foil, aluminum or stainless steel whose surface is treated with silver, copper, aluminum, nickel, carbon electrode, carbon, nickel, titanium, or the like may be used. The foam metal may be foam nickel, foam copper, foam aluminum, a foam alloy, foam carbon, or the like. The composite current collector may include a polymer material base layer and a metal layer. The composite current collector may be formed by forming a metal material (copper, a copper alloy, nickel, a nickel alloy, titanium, a titanium alloy, silver, a silver alloy, or the like) on a polymer material substrate (for example, a substrate of polypropylene, polyethylene terephthalate, polybutylene terephthalate, polystyrene, or polyethylene).

For example, the negative electrode plate may include a negative electrode current collector and a negative electrode active material arranged on at least one surface of the negative electrode current collector.

For example, the negative electrode current collector has two surfaces opposite to each other in a thickness direction of the negative electrode current collector, and the negative electrode active material is arranged on either or both of the two opposite surfaces of the negative electrode current collector.

For example, the negative electrode active material may be a negative electrode active material used for a battery cell and well known in the art. For example, the negative electrode active material may include at least one of the following materials: artificial graphite, natural graphite, soft carbon, hard carbon, a silicon-based material, a tin-based material, lithium titanate, and the like. The silicon-based material may be selected from at least one of elemental silicon, a silicon-oxygen compound, a silicon-carbon composite, a silicon-nitrogen composite, or a silicon alloy. The tin-based material may be selected from at least one of elemental tin, a tin-oxygen compound, or a tin alloy. However, the present application is not limited to such materials, and may alternatively use other conventional materials that can be used as negative electrode active materials for batteries. Only one or a combination of two or more of the negative electrode active materials may be used.

In some embodiments, a material of the positive electrode current collector may be aluminum, and a material of the negative electrode current collector may be copper.

In some embodiments, the electrode assembly 200 further includes the separating member, and the separating member is arranged between the positive electrode and the negative electrode.

In some embodiments, the separating member is a separator. A type of the separator is not particularly limited in the present application, and any well-known separator with a porous structure having good chemical stability and mechanical stability may be selected.

For example, a material of the separator may be selected from at least one of glass fiber, non-woven fabric, polyethylene, polypropylene, polyvinylidene fluoride, and ceramic. The separator may be a single-layer film or a multi-layer composite film without special limitations. When the separator is a multi-layer composite film, materials of layers may be the same or different without special limitations. The separating member may be an independent component located between the positive and the negative electrodes, or may be attached to surfaces of the positive and negative electrodes.

In some embodiments, the separating member is a solid electrolyte. The solid electrolyte is arranged between the positive electrode and the negative electrode, to have functions of transmitting ions and isolating the positive electrode from the negative electrode.

In some embodiments, the battery cell further includes an electrolyte. The electrolyte has a function of ion conduction between the positive and negative electrodes. A type of the electrolyte is not specifically limited in the present application, and may be selected according to requirements. The electrolyte may be liquid, gelled, or solid.

The liquid electrolyte includes an electrolyte salt and a solvent.

In some embodiments, the electrolyte salt may be selected from at least one of lithium hexafluorophosphate, lithium tetrafluoroborate, lithium perchlorate, lithium hexafluoroborate, lithium bis(fluorosulfonyl)imide, lithium bis-trifluoromethanesulfonimide, lithium trifluoromethanesulfonate, lithium difluorophosphate, lithium difluorooxalatoborate, lithium bisoxalatoborate, lithium difluorobisoxalate phosphate, and lithium tetrafluoro oxalate phosphate.

In some embodiments, the solvent may be selected from at least one of ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, dimethyl sulfone, methyl ethyl sulfone, and diethyl sulfone. Optionally, the solvent may be an ether solvent. The ether solvent may include one or more of ethylene glycol dimethyl ether, ethylene glycol diethyl ether, diethylene glycol dimethyl ether, triethylene glycol dimethyl ether, tetraethylene glycol dimethyl ether, 1,3-dioxolane, tetrahydrofuran, methyltetrahydrofuran, diphenyl ether, and crown ether.

The gelled electrolyte includes a skeleton network with a polymer as an electrolyte, combined with an ionic liquid-lithium salt.

The solid electrolyte includes a polymer solid electrolyte, an organic solid electrolyte, or a composite solid electrolyte.

For example, the polymer solid electrolyte may be a polyether (polyethylene oxide), polysiloxane, polycarbonate, polyacrylonitrile, polyvinylidene fluoride, polymethyl methacrylate, a single-ion polymer, a polyionic liquid-lithium salt, or cellulose.

For example, the organic solid electrolyte may be one or more of an oxide solid electrolyte (crystalline perovskite, a sodium superconducting ion conductor, garnet, and an amorphous LiPON film), a sulphide solid electrolyte (a crystalline lithium superconducting ion conductor (lithium germanium phosphosulfide and argyrodite) and amorphous sulfide), a halide solid electrolyte, a nitride solid electrolyte, and a hydride solid electrolyte.

For example, the composite solid electrolyte is formed by adding an organic solid electrolyte filler to the polymer solid electrolyte.

In some embodiments, the electrode assembly 200 is a wound structure. The positive electrode plate and the negative electrode plate are wound into the wound structure.

In some embodiments, tabs 201 are arranged on the electrode assembly 200. The tab may export a current from the electrode assembly 200. The tabs include a positive electrode tab and a negative electrode tab. The positive electrode tab and the negative electrode tab may be located at one end of a body portion together or at two ends of the body portion separately. During charge and discharge of the battery 100a, a positive electrode active substance and a negative electrode active substance react with an electrolyte solution, and the tabs 201 are connected to the electrode columns to form a current loop.

According to some embodiments of the present application, as shown in FIG. 3 to FIG. 6, a battery cell 1 described in an embodiment of the battery cell 1 in the present application includes a shell 100, an electrode assembly 200, a first processor 300, a detection sensor 400, and a second processor 500. The electrode assembly 200 is arranged inside the shell 100. The first processor 300 is arranged inside the shell 100. The detection sensor 400 is arranged inside the shell 100 and is electrically connected to the first processor 300 via first communication lines 410. The second processor 500 is arranged outside the shell 100 and is electrically connected to the first processor 300 via second communication lines 510. A quantity of the second communication lines 510 is less than a quantity of the first communication lines 410.

During use of the battery cell 1, the inside of the shell 100 is usually changes dynamically. For example, a volume of the electrode assembly 200 may be expanded. For another example, a temperature and a pressure inside the shell 100 may change, or gas is generated inside the shell 100. The detection sensor 400 may obtain information about an internal environment of the shell 100, so that effectiveness of managing a working status of the battery cell 1 can be improved, thereby improving working stability of the battery cell 1.

The first processor 300 may be configured to perform preliminary analysis processing on the information about the environment obtained by the detection sensor 400. For example, the first processor 300 may determine a gas composition and concentration, a temperature, or a pressure inside the shell 100 according to the information about the environment obtained by the detection sensor 400, to analyze the working status of the battery cell 1.

After preliminary analysis processing is performed on the information about the internal environment of the shell 100, the first processor 300 may send the information about the internal environment to the second processor 500, and the second processor 500 performs further analysis processing. The second processor 500 is arranged inside the shell 100, thereby facilitating a connection between the second processor 500 and a component located outside the shell 100.

For example, the battery cell 1 may include a communication module. The second processor 500 may be connected to the communication module, and is connected to a management system (BMS) of a battery 100a by using the communication module. After being obtained by the detection sensor 400, the information about the internal environment of the shell 100 is sequentially processed by the first processor 300, the second processor 500, and the management system of the battery 100a, so that the management system of the battery 100a controls and manages the battery cell 1 according to the internal environment of the shell 100. For example, the management system of the battery 100a performs charge and discharge control, thermal management, and the like on the battery cell 1 according to the internal environment of the shell 100.

The first communication lines 410 may be located inside the shell 100 to connect the first processor 300 to the detection sensor 400. The second communication lines 510 may run through the shell 100 to connect the first processor 300 to the second processor 500. The first communication lines 410 and the second communication lines 510 are both communication lines.

The environment inside the shell 100 is complex. Therefore, to sufficiently obtain the information about the internal environment of the shell 100, in some embodiments, a structure of the detection sensor 400 is usually complex, and a plurality of communication lines need to be led from the detection sensor 400 to transmit the information about the internal environment of the shell 100 to the outside. In some other embodiments, a plurality of detection sensors 400 need to be arranged inside the shell 100, and each detection sensor 400 leads a communication line to the outside to transmit the information about the internal environment of the shell 100 to the outside. Therefore, the battery cell 1 is provided with many communication lines inside the shell 100, that is, provided with many first communication lines 410.

The first processor 300 may be configured to process the information about the internal environment of the shell 100 received from the first communication lines 410, so that the first processor 300 can transmit the information about the internal environment of the shell 100 to the outside via the small quantity of second communication lines 510.

For example, the quantity of the first communication lines 410 is 5, 6, 8, or 10, and the quantity of the second communication lines 510 is 3 or 2. For another example, the quantity of the first communication lines 410 is 12, 14, or 15, and the quantity of the second communication lines 510 is 6 or 4.

Because the internal environment and an external environment of the shell 100 are complex and have a large difference, when a large quantity of communication lines run through the shell 100, risks such as heating and a short circuit of the communication lines are increased. The first processor 300 is arranged inside the shell 100, and the second processor 500 is arranged outside the shell 100. In this way, when the quantity of the second communication lines 510 is less than the quantity of the first communication lines 410, a quantity of communication lines running through the shell 100 can be reduced, so that a risk of a bad situation of the communication lines can be reduced. In addition, the quantity of communication lines running through the shell 100 is reduced, so that the battery cell 1 is more easily assembled. For example, the communication lines connected to the detection sensor 400 do not need to run through the shell 100, thereby facilitating assembly of the detection sensor 400. In addition, the quantity of communication lines running through the shell 100 is reduced, so that the shell 100 can be more easily sealed, thereby improving the working stability of the battery cell 1.

One first communication line 410 is connected between one pin of the detection sensor 400 and one pin of the first processor 300. In other words, one first communication line 410 is provided between each pair of pins connected between the detection sensor 400 and the first processor 300. One pin of the detection sensor 400 may be connected to at least one pin of the first processor 300. For example, if a pin 1 of the detection sensor is connected to a pin 1 of the first processor 300, the pin 1 of the detection sensor 400 and the pin 1 of the first processor 300 become one pair of pins (one-to-one). For example, if the pin 1 of the detection sensor is separately connected to the pin 1 and a pin 2 of the first processor 300 (one-to-two), the pin 1 of the detection sensor 400 and the pin 1 of the first processor 300 are one pair of pins, and the pin 1 of the detection sensor 400 and the pin 2 of the first processor 300 are also one pair of pins. In this way, one first communication line 410 is provided between the pin 1 of the detection sensor 400 and the pin 1 of the first processor 300, and one first communication line 410 is also provided between the pin 1 of the detection sensor 400 and the pin 2 of the first processor 300. Other one-to-many situations may also be deduced by analogy in the foregoing manner.

In conclusion, there may be a one-to-one or a one-to-many relationship between pins connected to the detection sensor 400 and the first processor 300, and the quantity of first communication lines 410 may be calculated according to that one first communication line 410 is provided between each pair of connected pins. In short, a sum of the quantity of first communication lines between the detection sensor 400 and the first processor 400 is a quantity of first communication lines 410 connected between pins of the detection sensor 400 and the first processor 300.

Similarly, one second communication line 510 is connected between one pin of the first processor 300 and one pin of the second processor 500. In other words, one second communication line 510 is provided between each pair of pins connected between the second processor 500 and the first processor 300. One pin of the first processor 300 may be connected to at least one pin of the second processor 500. The quantity of second communication lines 510 between the first processor 300 and the second processor 500 is a quantity of second communication lines 510 led out by pins connected between the first processor 300 and the second processor 500.

The first processor 300 and the second processor 500 each may be an integrated circuit chip, having a capability of processing a signal. The first processor 300 and the second processor 500 each may alternatively be a general-purpose processor, a digital signal processor (DSP), an application-specific integrated circuit (ASIC), a field programmable gate array (FPGA) or another programmable logic device, a discrete gate or a transistor logic device, or a discrete hardware component. The general-purpose processor may be a microprocessor, or the processor may be any conventional processor or the like.

For example, the first processor 300 and the second processor 500 are both MCUs.

Optionally, at least one detection sensor 400 is provided, and each detection sensor 400 is electrically connected to the first processor 300 via first communication lines 410.

Optionally, the detection sensor 400 includes, but is not limited to, a barometric sensor, a gas sensor, or a temperature sensor. The first processor 300 may obtain information about different internal environments of the shell 100 by using different detection sensors 400.

Specifically, the barometric sensor may be configured to detect a pressure inside the shell 100. During working of the battery cell 1, the pressure changes. For example, the pressure quickly increases due to generation of gas inside the shell 100 or a temperature rise. The detection sensor 400 is set as the barometric sensor, so that the pressure inside the shell 100 can be detected, thereby facilitating management of the working status of the battery cell 1.

The gas sensor may be configured to detect a gas composition inside the shell 100, for example, detect H₂, CO, CO₂, or organic gas. Some gas, for example, one or more of H₂, CO, CO₂, and organic gas, may be generated during working of the battery cell 1. The detection sensor 400 is set as the gas sensor, so that a concentration of one or more types of gas inside the shell 100 can be detected, thereby facilitating management of the working status of the battery cell 1.

The temperature sensor may be configured to detect a temperature inside the shell 100. During working of the battery cell 1, the temperature changes. For example, the temperature rises. The detection sensor 400 is set as the temperature sensor, so that the temperature inside the shell 100 can be detected, thereby facilitating management of the working status of the battery cell 1.

According to some embodiments of the present application, optionally, as shown in FIG. 3 and FIG. 5, the shell 100 includes a wall portion 101. Mounting holes 102 are provided in the wall portion 101. The second communication lines 510 extend from the inside of the shell 100 to the outside of the shell 100 via the mounting holes 102. The shell 100 may include an end cover 120 and a case 110. In some embodiments, the end cover 120 forms the wall portion 101. In some other embodiments, a side wall or a bottom wall of the case 110 forms the wall portion 101.

The wall portion 101 may be for mounting the first processor 300. The wall portion 101 is flat, thereby facilitating mounting of the first processor 300. The mounting holes 102 are provided in the wall portion 101, so that the second communication lines 510 may be allowed to extend from the inside of the shell 100 to the outside of the shell 100 through the shell 100, so that the first processor 300 and the second processor 500 can transmit information to each other.

The second communication lines 510 are arranged, so that the quantity of communication lines running through the shell 100 is reduced, so that an area occupied by the mounting holes 102 in the wall portion 101 is reduced, thereby improving space utilization of the wall portion 101.

According to some embodiments of the present application, optionally, as shown in FIG. 5, a quantity of the mounting holes 102 and the quantity of the second communication lines 510 are the same, and are in a one-to-one correspondence. For example, the quantity of the mounting holes 102 and the quantity of the second communication lines 510 are both 3, 2, or 1.

Each mounting hole 102 may be provided for one second communication line 510 to run through. The mounting holes 102 and the second communication lines 510 are arranged in a one-to-one correspondence, so that interference between different second communication lines 510 can be reduced. Specifically, after connections between the second processor 500 and different second communication lines 510 are implemented, the mounting holes 102 and the second communication lines 510 are arranged in a one-to-one correspondence, thereby facilitating connections between the first processor 300 and the different second communication lines 510. Alternatively, after connections between the first processor 300 and different second communication lines 510 are implemented, the mounting holes 102 and the second communication lines 510 are arranged in a one-to-one correspondence, thereby facilitating connections between the second processor 500 and the different second communication lines 510.

The second communication lines 510 are arranged, so that the quantity of communication lines running through the shell 100 can be reduced, so that the quantity of provided mounting holes 102 is correspondingly reduced, which is beneficial to reducing costs and sealing the shell 100, thereby improving the working reliability of the battery cell 1.

According to some embodiments of the present application, optionally, as shown in FIG. 5, the battery cell 1 includes a first circuit board 310. The first circuit board 310 is arranged inside the shell 100 and blocks the mounting holes 102. The first processor 300 is arranged on the first circuit board 310.

The first circuit board 310 may be mounted on the wall portion 101. The wall portion 101 is flat, thereby facilitating mounting of the first circuit board 310. The first circuit board 310 is arranged to block the mounting holes 102, so that a sealing effect of the shell 100 can be improved, and leakage of an electrolyte solution inside the battery cell 1 via the mounting holes 102 can be limited.

The first processor 300 is arranged on the first circuit board 310, and the first processor 300 may be mounted on the wall portion 101. In this way, mounting of the first processor 300 is facilitated, so that connection stability between the first processor 300 and another component can be improved. The first circuit board 310 is arranged inside the shell 100, which can facilitate arranging the first processor 300 inside the shell 100.

The first circuit board 310 may be electrically connected to the detection sensor 400 via the first communication lines 410. The first processor 300 may be electrically connected to the first communication lines 410 via the first circuit board 310, and may be further electrically connected to the detection sensor 400 via the first communication lines 410. The first processor 300 may alternatively be directly electrically connected to the first communication lines 410, and may be connected to the detection sensor 400 via the first communication lines 410.

According to some embodiments of the present application, optionally, as shown in FIG. 5, the first processor 300 is arranged on a side of the first circuit board 310 facing away from the inside of the shell 100.

The first processor 300 is arranged on the first circuit board 310, so that connection stability between the first processor 300 and the detection sensor 400 can be improved.

The first processor 300 is arranged on the side of the first circuit board 310 facing away from the inside of the shell 100, so that the first circuit board 310 may protect the first processor 300. Specifically, the first circuit board 310 may block the first processor 300 and the electrode assembly 200, which may prevent the first processor 300 from coming into direct contact with the electrode assembly 200, thereby reducing a risk of a short circuit caused by contact between the first processor 300 and the electrode assembly 200, and reducing corrosion damage of the electrode assembly 200 to the first processor 300.

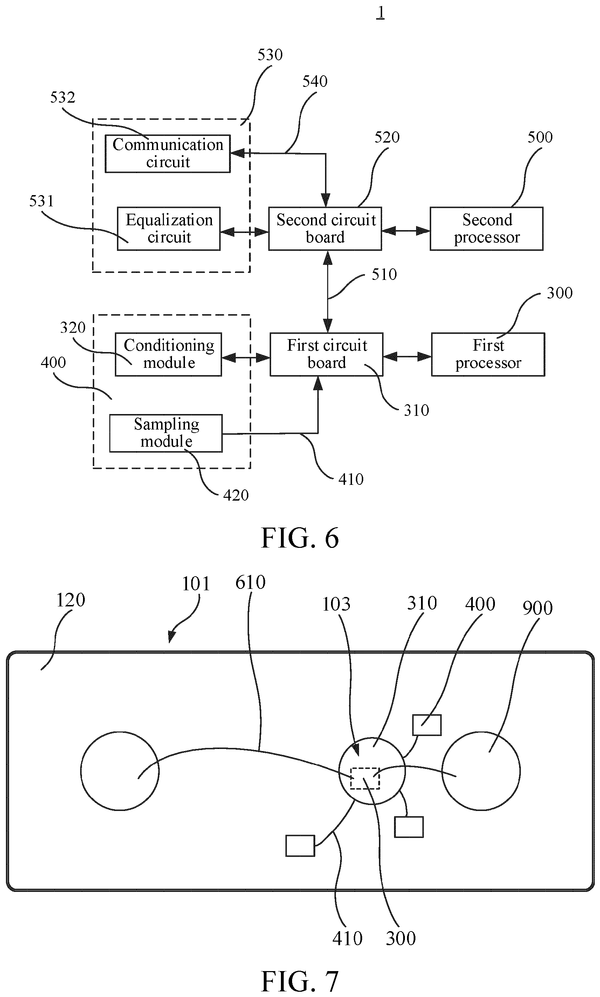

According to some embodiments of the present application, optionally, as shown in FIG. 5 and FIG. 6, the detection sensor 400 includes a sampling module 420 and a conditioning module 320. The sampling module 420 is arranged on the first circuit board 310 and is electrically connected to the conditioning module 320. The conditioning module 320 is electrically connected to the first processor 300 via the first communication lines 410. The sampling module 420 is arranged on a side of the first circuit board 310 facing the inside of the shell 100. The conditioning module 320 is arranged on the side of the first circuit board 310 facing away from the inside of the shell 100.

The sampling module 420 may obtain the information about the internal environment of the shell 100 and output a sampling signal corresponding to the information about the internal environment of the shell 100. The sampling module 420 is arranged on the side of the first circuit board 310 facing the inside of the shell 100, so that the sampling module 420 quickly and accurately samples the internal environment of the shell 100. The sampling signal is usually an analog signal, and is not suitable for being applied to application such as data acquisition, control processes, calculation, display, and reading performed by the first processor 300. The conditioning module 320 may be configured to convert the sampling signal into a digital signal, so that the information about the internal environment of the shell 100 can be analyzed by the first processor 300.

In addition, the sampling signal is usually a small voltage, current, or change. The conditioning module 320 may include an amplification circuit. The amplification circuit may be configured to amplify the sampling signal before the sampling signal is converted into the digital signal, to improve precision when the sampling signal is converted into the digital signal.

Optionally, the conditioning module 320 may further include a filter circuit. The filter circuit may be configured to perform low-pass filtering on the sampling signal, to eliminate noise and prevent aliasing.

The conditioning module 320 is arranged on the first circuit board 310, so that connection stability between the conditioning module 320 and the detection sensor 400 can be improved, and connection stability between the conditioning module 320 and the first processor 300 can also be improved.

The conditioning module 320 is arranged on the side of the first circuit board 310 facing away from the inside of the shell 100, so that the first circuit board 310 may protect the conditioning module 320. Specifically, the first circuit board 310 may block the conditioning module 320 and the electrode assembly 200, which may prevent the conditioning module 320 from coming into direct contact with the electrode assembly 200, thereby reducing a risk of a short circuit caused by contact between the conditioning module 320 and the electrode assembly 200, and reducing corrosion damage of the electrode assembly 200 to the conditioning module 320.

According to some embodiments of the present application, optionally, as shown in FIG. 5 and FIG. 7, a first fixing groove 103 is provided on a side of the wall portion 101 facing the inside of the shell 100. The mounting holes 102 are provided at the bottom of the first fixing groove 103 and are in communication with the first fixing groove 103. The first fixing groove 103 is in communication with the inside of the shell 100. The first circuit board 310 is fixedly arranged in the first fixing groove 103.

An axial direction of the mounting hole 102 is an interval direction between an end of the mounting hole 102 facing the inside of the shell 100 and an end of the mounting hole 102 facing away from the inside of the shell 100. A radial direction of the mounting hole 102 is perpendicular to the axial direction of the mounting hole 102.

The mounting holes 102 may be in communication with the inside of the shell 100 via the first fixing groove 103. The first fixing groove 103 is provided, so that a moving range of the first circuit board 310 in the radial direction of the mounting holes 102 can be limited, thereby facilitating mounting of the first circuit board 310. In addition, space occupied by the first circuit board 310 inside the shell 100 can be reduced, so that volume energy density of the battery cell 1 can be improved. In addition, the first circuit board 310 is fixedly arranged in the first fixing groove 103, so that an area of the first circuit board 310 exposed to the inside of the shell 100 can also be reduced, to reduce a probability of corrosion by the electrolyte solution. In addition, the first circuit board 310 can also be further away from the electrode assembly 200, to reduce a probability of a short circuit caused by contact with the electrode assembly 200, so that reliability of the first circuit board 310 can be improved.

A radial dimension of the mounting hole 102 may be smaller than a dimension of the first fixing groove 103 in the direction. Such an arrangement facilitates blocking of the mounting holes 102 by the first circuit board 310.

Optionally, a shape of the first circuit board 310 matches a shape of the first fixing groove 103, so that the first fixing groove 103 is configured to mount and position the first circuit board 310. For example, the shapes of the first circuit board 310 and the first fixing groove 103 each are a circle or an ellipse. For another example, the shapes of the first circuit board 310 and the first fixing groove 103 each are a shape formed by a combination of a rectangle and two semi-circles. Two opposite sides of the rectangle and diameters of the two semi-circles have the same length and are connected.

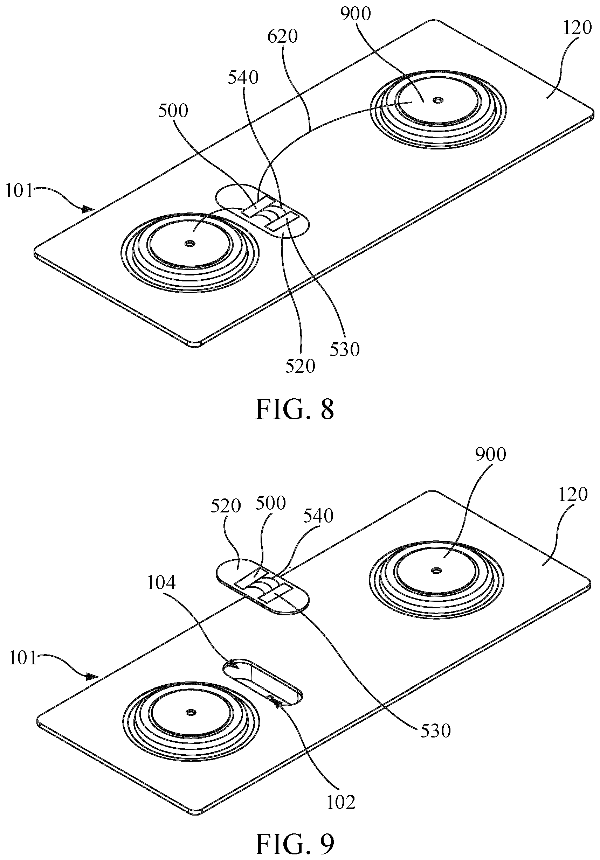

According to some embodiments of the present application, optionally, as shown in FIG. 5 and FIG. 8, the battery cell 1 includes a second circuit board 520. The second circuit board 520 is arranged outside the shell 100 and blocks the mounting holes 102. The second processor 500 is arranged on the second circuit board 520.

The second circuit board 520 may be mounted on the wall portion 101. The wall portion 101 is flat, thereby facilitating mounting of the second circuit board 520. The second circuit board 520 is arranged to block the mounting holes 102, so that leakage of the electrolyte solution inside the battery cell 1 via the mounting holes 102 can be limited.

The second processor 500 is arranged on the second circuit board 520, and the second processor 500 may be mounted on the wall portion 101. In this way, mounting of the second processor 500 is facilitated, so that connection stability between the second processor 500 and another component can be improved. The second circuit board 520 is arranged outside the shell 100, which can facilitate arranging the second processor 500 outside the shell 100.

The second circuit board 520 may be electrically connected to the first processor 300 via the second communication lines 510. The second processor 500 may be electrically connected to the second communication lines 510 via the second circuit board 520, to be further electrically connected to the first processor 300. The second processor 500 may alternatively be directly electrically connected to the second communication lines 510, and may be connected to the first processor 300 via the second communication lines 510.

Further, the first circuit board 310 and the second circuit board 520 are oppositely arranged at two ends of the mounting holes 102.

According to some embodiments of the present application, optionally, as shown in FIG. 5 and FIG. 9, a second fixing groove 104 is provided on a side of the wall portion 101 facing away from the inside of the shell 100. The second fixing groove 104 is in communication with the mounting holes 102 and the outside of the shell 100. The second circuit board 520 is fixedly arranged in the second fixing groove 104.

The second fixing groove 104 is provided, so that a moving range of the second circuit board 520 in the radial direction of the mounting holes 102 can be limited, thereby facilitating mounting of the second circuit board 520.

Further, the mounting holes 102 are provided in a bottom wall of the second fixing groove 104, and the radial dimension of the mounting hole 102 is smaller than a dimension of the second fixing groove 104 in the direction. Such an arrangement facilitates blocking of the mounting holes 102 by the second circuit board 520.

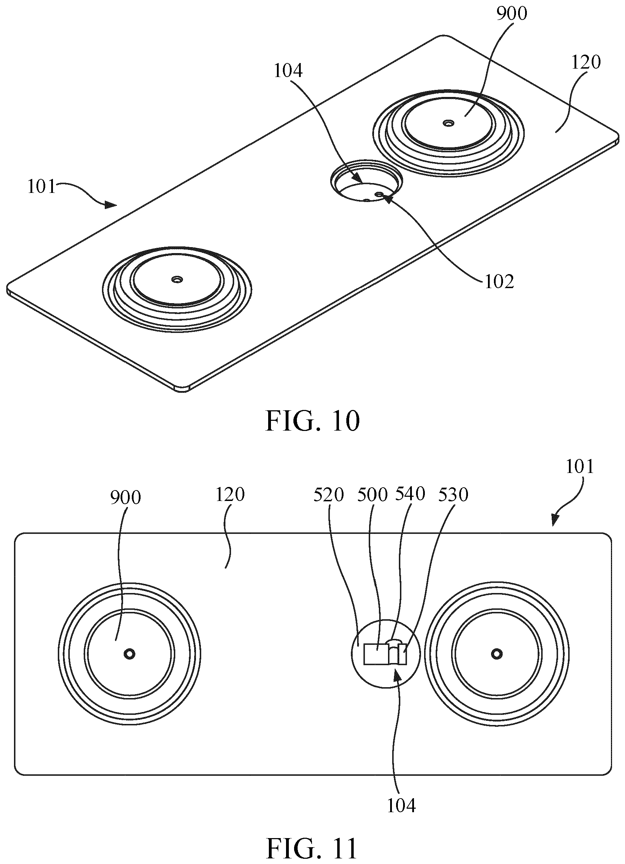

Optionally, a shape of the second circuit board 520 matches a shape of the second fixing groove 104, so that the second fixing groove 104 is configured to mount and position the second circuit board 520. For example, as shown in FIG. 10 and FIG. 11, the shapes of the second circuit board 520 and the second fixing groove 104 each are a circle or an ellipse. For another example, the shapes of the second circuit board 520 and the second fixing groove 104 each are a shape formed by a combination of a rectangle and two semi-circles. Two opposite sides of the rectangle and diameters of the two semi-circles have the same length and are connected.

According to some embodiments of the present application, optionally, as shown in FIG. 4 and FIG. 5, the second processor 500 is arranged on a side of the second circuit board 520 facing away from the inside of the shell 100.

The second processor 500 is arranged on the side of the second circuit board 520 facing away from the inside of the shell 100, so that the second circuit board 520 may protect the second processor 500. Specifically, the second circuit board 520 may block the second processor 500, the electrode assembly 200, and the electrolyte solution, which may prevent the second processor 500 from coming into direct contact with the electrode assembly 200 and the electrolyte solution, thereby reducing a risk of a short circuit caused by contact among the second processor 500, the electrode assembly 200, and the electrolyte solution, and reducing corrosion damage of the electrode assembly 200 and the electrolyte solution to the second processor 500.

In addition, the second processor 500 is arranged on the side of the second circuit board 520 facing away from the inside of the shell 100, to facilitate a connection between the second processor 500 and a component located outside the shell 100, and also facilitate heat dissipation of the second processor 500, thereby improving heat dissipation performance.

According to some embodiments of the present application, optionally, as shown in FIG. 5 and FIG. 6, the battery cell 1 includes a functional circuit 530. The functional circuit 530 is electrically connected to the second processor 500 and is arranged on the side of the second circuit board 520 facing away from the inside of the shell 100.

The functional circuit 530 is arranged on the side of the second circuit board 520 facing away from the inside of the shell 100, so that the second circuit board 520 may protect the functional circuit 530. Specifically, the second circuit board 520 may block the functional circuit 530, the electrode assembly 200, and the electrolyte solution, which may prevent the functional circuit 530 from coming into direct contact with the electrode assembly 200 and the electrolyte solution, thereby reducing a risk of a short circuit caused by contact among the functional circuit 530, the electrode assembly 200, and the electrolyte solution, and reducing corrosion damage of the electrode assembly 200 and the electrolyte solution to the functional circuit 530.

In addition, the functional circuit 530 is arranged on the side of the second circuit board 520 facing away from the inside of the shell 100, thereby facilitating a connection between the functional circuit 530 and a component located outside the shell 100.

Further, the functional circuit 530 and the second processor 500 are arranged on the same side of the second circuit board 520. In this way, the functional circuit 530 is connected to the second processor 500.

According to some embodiments of the present application, optionally, as shown in FIG. 5 to FIG. 7, at least two detection sensors 400 are provided. The at least two detection sensors 400 are respectively connected to the first processor 300 via respective first communication lines 410. The first processor 300 is configured to convert output signals of the at least two detection sensors 400 into a serial signal and transmit the serial signal to the second processor 510 via the second communication lines 500.

The serial signal is a signal that communicates in a serial manner. When the first processor 300 transmits information to the second processor 500, communication is performed in the serial manner, so that the quantity of required second communication lines 510 can be reduced, and the quantity of the mounting holes 102 can be correspondingly reduced, thereby facilitating sealing of the shell 100. The first processor 300 is configured to convert the output signals of the at least two detection sensors 400 into the serial signal, so that the first processor 300 can output the information about the internal environment of the shell 100 obtained by the at least two detection sensors 400 to the outside.

Further, communication is performed in the serial manner, so that in some scenarios, the first processor 300 can transmit information to the second processor 500 via one second communication line 510.

According to some embodiments of the present application, optionally, as shown in FIG. 4 to FIG. 6, the battery cell 1 further includes the functional circuit 530. The functional circuit 530 is arranged outside the shell 100. The functional circuit 530 is electrically connected to the second processor 500 via third communication lines 540. A quantity of the third communication lines 540 is greater than the quantity of the second communication lines 510.

During working of the battery cell 1, a running status of the battery cell 1 usually needs to be monitored and managed, to help the battery cell 1 to maintain a stable and good working status. The functional circuit 530 may play a role in a process of monitoring and managing the battery cell 1. For example, the battery cell 1 may be connected to the management system (BMS) of the battery 100a by using the functional circuit 530, and the management system of the battery 100a may have functions of controlling, managing, detecting, and calculating the battery cell 1. For another example, the functional circuit 530 may have functions of problem diagnosis and problem processing on the working status of the battery cell 1.

The third communication lines 540 may be located inside the shell 100 to connect the second processor 500 to the functional circuit 530. The second communication lines 510 may run through the shell 100 to connect the first processor 300 to the second processor 500. The third communication lines 540 and the second communication lines 510 are both communication lines. The functional circuit 530 is arranged outside the shell 100, and the second processor 500 is arranged outside the shell 100. In this way, when the quantity of the second communication lines 510 is less than the quantity of the third communication lines 540, the quantity of communication lines running through the shell 100 can be reduced, so that the shell 100 is more easily sealed, and a risk of unreliability caused by the large quantity of communication lines is reduced, thereby improving the working stability of the battery cell 1.

One third communication circuit 540 is connected between one pin of the second processor 500 and one pin of the functional circuit 530. In other words, one third communication circuit 540 is provided between each pair of pins connected between the functional circuit 530 and the second processor 500. One pin of the second processor 500 may be connected to at least one pin of the functional circuit 530. The quantity of third communication circuits 540 between the second processor 500 and the functional circuit 530 is a quantity of third communication circuits 540 led out by pins connected between the second processor 500 and the functional circuit 530.

According to some embodiments of the present application, optionally, as shown in FIG. 6, the functional circuit 530 includes at least one of an equalization circuit 531 and a communication circuit 532.

A plurality of battery cells 1 may be connected to each other, to provide a larger output voltage or output power. When the plurality of battery cells 1 are connected to each other, voltages of the battery cells 1 are inconsistent, resulting in a risk of overcharging or overdischarging a battery cell 1. The equalization circuit 531 is arranged, so that consistency of the plurality of battery cells 1 can be maintained, thereby reducing the risk of overcharging or overdischarging the battery cell 1. For example, by using the equalization circuit 531, a battery cell 1 having a higher voltage in the plurality of battery cells 1 may be discharged, to reduce the voltage of the battery cell 1. For another example, by using the equalization circuit 531, a battery cell 1 having a lower voltage in the plurality of battery cells 1 may be charged, to increase the voltage of the battery cell 1.

During working of the battery cell 1, the running status of the battery cell 1 usually needs to be monitored and managed by an external system, to help the battery cell 1 to maintain a stable and good working status. By using the communication circuit 532, the second processor 500 can transmit the running status of the battery cell 1 to the external system, for the external system to manage the battery cell 1. For example, by using the communication circuit 532, the second processor 500 can transmit the running status of the battery cell 1 to the management system of the battery 100a, for the management system of the battery 100a to manage the battery cell 1.

Optionally, the communication circuit 532 includes a visible light communication (VLC) circuit 532, a Bluetooth communication circuit 532, a radio frequency (RF) communication circuit, and the like.

According to some embodiments of the present application, optionally, as shown in FIG. 3 to FIG. 5, the battery cell 1 includes two electrode columns 600. The two electrode columns 600 run through the wall portion 101 at an interval and are electrically connected to the electrode assembly 200. The first processor 300 and the second processor 500 are electrically connected to the two electrode columns 600. The electrode assembly 200 separately supplies power to the first processor 300 and the second processor 500 through the two electrode columns 600.

Specifically, one end of the electrode column 600 is arranged facing the inside of the shell 100, and may be configured to electrically connect the electrode assembly 200 and the first processor 300 that are arranged inside the shell 100. The other end of the electrode column 600 is arranged facing the outside of the shell 100, and may be connected to the outside and the second processor 500. In this way, the electrode assembly 200 can separately supply power to the first processor 300 and the second processor 500 through the electrode columns 600.

The electrode assembly 200 is arranged to separately supply power to the first processor 300 and the second processor 500 through the two electrode columns 600, so that an additional power supply does not need to be introduced, so that space utilization of the battery cell 1 can be improved, and connection lines between the battery cell 1 and the outside can be simplified.

Further, the electrode assembly 200 may be charged through the electrode columns 600.

Further, the two electrode columns 600 may be a positive electrode column and a negative electrode column.

According to some embodiments of the present application, optionally, as shown in FIG. 3 and FIG. 7, the first processor 300 and the two electrode columns 600 are electrically connected via a first power supply line 610 located inside the shell 100.

The first power supply line 610 may connect the first processor 300 between the two electrode columns 600. Specifically, a current may sequentially flow from one electrode column 600 to the first processor 300, the other electrode column 600, and the electrode assembly 200, so that a current loop is formed to supply power to the first processor 300.

The first power supply line 610 is arranged inside the shell 100, so that the first power supply line 610 is connected to the first processor 300 and the two electrode columns 600.

The second processor 500 is electrically connected to the two electrode columns 600 via a second power supply line 620 located outside the shell 100.

The second power supply line 620 may connect the second processor 500 between the two electrode columns 600. Specifically, a current may sequentially flow from one electrode column 600 to the second processor 500, the other electrode column 600, and the electrode assembly 200, so that a current loop is formed to supply power to the second processor 500.

The second power supply line 620 is arranged inside the shell 100, so that the second power supply line 620 is connected to the second processor 500 and the two electrode columns 600.

The first power supply line 610 and the second power supply line 620 are both power supply lines. The first power supply line 610 and the second power supply line 620 are respectively arranged inside and outside the shell 100, so that lengths of the power supply lines can be reduced, redundancy of the power supply lines can be reduced, and a risk of a bad situation of the power supply lines can be reduced, thereby improving the working reliability of the battery cell 1.

According to some embodiments of the present application, optionally, as shown in FIG. 3 to FIG. 5, the shell 100 includes a case 110 and an end cover 120. The case 110 is provided with an open end 111. The end cover 120 covers the open end 111. The electrode assembly 200 is arranged inside the case 110. The mounting holes 102 are provided on the end cover 120. The first processor 300 and the detection sensor 400 are located on a side of the end cover 120 facing the inside of the shell 100. The second processor 500 is located on a side of the end cover 120 facing away from the inside of the shell 100.

The foregoing opening 112 may be provided at the open end 111. The end cover 120 may have a function of positioning the two electrode columns 600. The two electrode columns 600 may be fixed relative to the end cover 120.

The end cover 120 is flat, and the mounting holes 102 are provided on the end cover 120, thereby facilitating blocking of the mounting holes 102.

The first processor 300 and the detection sensor 400 are arranged on the side of the end cover 120 facing the inside of the shell 100, thereby helping the detection sensor 400 to quickly and accurately obtain the information about the internal environment of the shell 100, and helping the first processor 300 to process the information about the internal environment of the shell 100 obtained by the detection sensor 400.

The second processor 500 is arranged on the side of the end cover 120 facing away from the inside of the shell 100, thereby facilitating a connection between the second processor 500 and a component located outside the shell 100. The second communication lines 510 may run through the mounting holes 102 to run through the end cover 120, to connect the first processor 300 to the second processor 500.

According to some embodiments of the present application, optionally, as shown in FIG. 3 to FIG. 11, a battery cell 1 includes a shell 100, an electrode assembly 200, a first processor 300, a detection sensor 400, and a second processor 500. The electrode assembly 200 is arranged inside the shell 100. The first processor 300 is arranged inside the shell 100. The detection sensor 400 is arranged inside the shell 100 and is electrically connected to the first processor 300 via first communication lines 410. The second processor 500 is arranged outside the shell 100 and is electrically connected to the first processor 300 via second communication lines 510. A quantity of the second communication lines 510 is less than a quantity of the first communication lines 410. The shell 100 includes a wall portion 101. Mounting holes 102 are provided in the wall portion 101. The second communication lines 510 extend from the inside of the shell 100 to the outside of the shell 100 via the mounting holes 102. A quantity of the mounting holes 102 and the quantity of the second communication lines 510 are the same, and are in a one-to-one correspondence. The battery cell 1 includes a first circuit board 310. The first circuit board 310 is arranged inside the shell 100 and blocks the mounting holes 102. The first processor 300 is arranged on the first circuit board 310. The first processor 300 is arranged on a side of the first circuit board 310 facing away from the inside of the shell 100. The battery cell 1 includes a conditioning module 320. The conditioning module 320 is arranged on the side of the first circuit board 310 facing away from the inside of the shell 100. The conditioning module 320 is electrically connected between the first processor 300 and the detection sensor 400. A first fixing groove 103 is provided on a side of the wall portion 101 facing the inside of the shell 100. The mounting holes 102 are provided at the bottom of the first fixing groove 103 and are in communication with the first fixing groove 103. The first fixing groove 103 is in communication with the inside of the shell 100. The first circuit board 310 is fixedly arranged in the first fixing groove 103. The battery cell 1 includes a second circuit board 520. The second circuit board 520 is arranged outside the shell 100 and blocks the mounting holes 102. The second processor 500 is arranged on the second circuit board 520. A second fixing groove 104 is provided on a side of the wall portion 101 facing away from the inside of the shell 100. The second fixing groove 104 is in communication with the mounting holes 102 and the outside of the shell 100. The second circuit board 520 is fixedly arranged in the second fixing groove 104. The second processor 500 is arranged on a side of the second circuit board 520 facing away from the inside of the shell 100. The battery cell 1 includes a functional circuit 530. The functional circuit 530 is electrically connected to the second processor 500 and is arranged on the side of the second circuit board 520 facing away from the inside of the shell 100. At least two detection sensors 400 are provided. The at least two detection sensors 400 are respectively connected to the first processor 300 via respective first communication lines 410. The first processor 300 is configured to convert output signals of the at least two detection sensors 400 into a serial signal and transmit the serial signal to the second processor 510 via the second communication lines 500. The battery cell 1 further includes the functional circuit 530. The functional circuit 530 is arranged outside the shell 100. The functional circuit 530 is electrically connected to the second processor 500 via third communication lines. A quantity of the third communication lines is greater than the quantity of the second communication lines 510. The functional circuit 530 includes at least one of an equalization circuit 531 and a communication circuit 532. The battery cell 1 includes two electrode columns 600. The two electrode columns 600 run through the wall portion 101 at an interval and are electrically connected to the electrode assembly 200. The first processor 300 and the second processor 500 are electrically connected to the two electrode columns 600. The electrode assembly 200 separately supplies power to the first processor 300 and the second processor 500 through the two electrode columns 600. The first processor 300 and the two electrode columns 600 are electrically connected via a first power supply line 610 located inside the shell 100. The second processor 500 is electrically connected to the two electrode columns 600 via a second power supply line 620 located outside the shell 100. The shell 100 includes a case 110 and an end cover 120. The case 110 is provided with an open end 111. The end cover 120 covers the open end 111. The electrode assembly 200 is arranged inside the case 110. The mounting holes 102 are provided on the end cover 120. The first processor 300 and the detection sensor 400 are located on a side of the end cover 120 facing the inside of the shell 100. The second processor 500 is located on a side of the end cover 120 facing away from the inside of the shell 100.

According to some embodiments of the present application, as shown in FIG. 2, a battery 100a includes the foregoing battery cell 1. In such an arrangement, a quantity of communication lines running through the shell 100 is reduced, so that the shell 100 can be more easily sealed, thereby improving stability and reliability of the battery cell 1 during working, and further improving stability and reliability of the battery 100a during working.

According to some embodiments of the present application, as shown in FIG. 1, a power consuming device includes the foregoing battery 100a. In such an arrangement, stability and reliability of the battery cell 1 during working can be improved, thereby improving stability and reliability of the battery 100a during working, and further improving stability and reliability of the power consuming device during working.

In conclusion, in the embodiments of the present application, the information about the internal environment of the shell 100 can be obtained, and the quantity of communication lines running through the shell 100 can be reduced, so that the shell 100 is more easily sealed, thereby improving the working stability of the battery cell 1.

Finally, it should be noted that, the foregoing embodiments are merely used for describing the technical solutions of the present application, but are not intended to limit the present application. It should be understood by a person of ordinary skill in the art that although the present application has been described in detail with reference to the foregoing embodiments, modifications can be made to the technical solutions described in the foregoing embodiments, or equivalent replacements can be made to some or all of the technical features, and these modifications or replacements will not cause the essence of corresponding technical solutions to depart from the scope of the technical solutions in the embodiments of the present application, and should fall within the scope of the claims and the specification of the present application. Especially, as long as there is no structural conflict, the various technical features mentioned in each embodiment can be combined in any way. The present application is not limited to the particular embodiments disclosed herein, but includes all technical solutions that fall within the scope of the claims.

## Claims

1. A battery cell, comprising:
a shell;
an electrode assembly, arranged inside the shell;
a first processor, arranged inside the shell;
a detection sensor, arranged inside the shell and electrically connected to the first processor via first communication lines; and
a second processor, arranged outside the shell and electrically connected to the first processor via second communication lines, wherein a quantity of the second communication lines is less than a quantity of the first communication lines.

2. The battery cell according to claim 1, wherein
the shell comprises a wall portion, and mounting holes are provided in the wall portion; and the second communication lines extend from the inside of the shell to the outside of the shell via the mounting holes.

3. The battery cell according to claim 2, wherein
a quantity of the mounting holes and the quantity of the second communication lines are the same, and are in a one-to-one correspondence.

4. The battery cell according to claim 2 or 3, wherein
the battery cell comprises a first circuit board, the first circuit board is arranged inside the shell and blocks the mounting holes, and the first processor is arranged on the first circuit board.

5. The battery cell according to claim 4, wherein
the first processor is arranged on a side of the first circuit board facing away from the inside of the shell.

6. The battery cell according to claim 4 or 5, wherein
the detection sensor comprises a sampling module and a conditioning module, the sampling module is arranged on the first circuit board and is electrically connected to the conditioning module, and the conditioning module is electrically connected to the first processor via the first communication lines, wherein the sampling module is arranged on a side of the first circuit board facing the inside of the shell, and the conditioning module is arranged on the side of the first circuit board facing away from the inside of the shell.

7. The battery cell according to any one of claims 4 to 6, wherein
a first fixing groove is provided on a side of the wall portion facing the inside of the shell; the mounting holes are provided at the bottom of the first fixing groove and are in communication with the first fixing groove; the first fixing groove is in communication with the inside of the shell; and the first circuit board is fixedly arranged in the first fixing groove.

8. The battery cell according to any one of claims 2 to 7, wherein
the battery cell comprises a second circuit board, the second circuit board is arranged outside the shell and blocks the mounting holes, and the second processor is arranged on the second circuit board.

9. The battery cell according to claim 8, wherein
a second fixing groove is provided on a side of the wall portion facing away from the inside of the shell, the second fixing groove is in communication with the mounting holes and the outside of the shell, and the second circuit board is fixedly arranged in the second fixing groove.

10. The battery cell according to claim 8 or 9, wherein
the second processor is arranged on a side of the second circuit board facing away from the inside of the shell.

11. The battery cell according to claim 10, wherein
the battery cell comprises a functional circuit, and the functional circuit is electrically connected to the second processor and is arranged on the side of the second circuit board facing away from the inside of the shell.

12. The battery cell according to any one of claims 2 to 11, wherein
at least two detection sensors are provided, and the at least two detection sensors are respectively connected to the first processor via respective first communication lines; and the first processor is configured to convert output signals of the at least two detection sensors into a serial signal and transmit the serial signal to the second processor via the second communication lines.

13. The battery cell according to any one of claims 2 to 12, wherein
the battery cell further comprises the functional circuit, the functional circuit is arranged outside the shell, and the functional circuit is electrically connected to the second processor via third communication lines, wherein a quantity of the third communication lines is greater than the quantity of the second communication lines.

14. The battery cell according to claim 13, wherein
the functional circuit comprises at least one of an equalization circuit and a communication circuit.

15. The battery cell according to any one of claims 2 to 14, wherein
the battery cell comprises two electrode columns, and the two electrode columns run through the wall portion at an interval and are electrically connected to the electrode assembly; the first processor and the second processor are electrically connected to the two electrode columns; and the electrode assembly separately supplies power to the first processor and the second processor through the two electrode columns.

16. The battery cell according to claim 15, wherein
the first processor is electrically connected to the two electrode columns via a first power supply line located inside the shell; and the second processor is electrically connected to the two electrode columns via a second power supply line located outside the shell.

17. The battery cell according to claim 15 or 16, wherein
the shell comprises a case and an end cover, the case is provided with an open end, the end cover covers the open end, and the electrode assembly is arranged inside the case; the mounting holes are provided on the end cover; and the first processor and the detection sensor are located on a side of the end cover facing the inside of the shell, and the second processor is located on a side of the end cover facing away from the inside of the shell.

18. A battery, comprising a battery cell according to any one of claims 1 to 17.

19. A power consuming device, comprising a battery according to claim 18.
